# EUROPEAN PATENT APPLICATION

(11) **EP 4 841 835 A1**
(43) Date of publication of application: **18.11.2026**
(21) Application number: 25176479.1
(22) Date of filing: 14.05.2025
(51) Int. Cl.: H01S 3/036, H01S 3/13, H01S 3/134, H01S 3/23, H01S 3/223

(54) **OPTICAL AMPLIFICATION DEVICE, LITHOGRAPHY SYSTEM AND METHOD FOR CONTROLLING AN OUTPUT POWER OF AN OPTICAL AMPLIFICATION DEVICE**

(71) Applicant: TRUMPF Lasersystems for Semiconductor Manufacturing SE, 71254 Ditzingen (DE); ASML Netherlands B.V., 5500 AH Veldhoven (NL)
(72) Inventor: SCHULZ, Joachim, 70839 Gerlingen (DE); ETZEL, Kai, 74354 Besigheim (DE); SCHMITT, Matthias, 71229 Leonberg (DE); DILISSEN, Ruben Hendrik C, 70439 Stuttgart (DE); HOFMANN, Marius, 70191 Stuttgart (DE)
(74) Representative: Kutzenberger Wolff & Partner

(57) **Abstract**

The present invention concerns an optical amplification device comprising multiple optical amplifiers that are arranged in series to amplify laser radiation, wherein the multiple optical amplifiers each comprise a cavity, a laser gas supply to supply laser gas to the cavity, a laser gas exhaust to withdraw laser gas from the cavity, and a pressure sensor for measuring a gas pressure of the laser gas in the cavity, wherein a control unit that is configured to adjust an inflow of laser gas to a first cavity of the cavities and/or an outflow of laser gas from the first cavity of the cavities depending on the gas pressure measured in one or more of the other cavities.

## Description

The invention concerns an optical amplification device comprising multiple optical amplifiers that are arranged in series to amplify laser radiation, wherein the multiple optical amplifiers each comprise a cavity, a laser gas supply to supply laser gas to the cavity, a laser gas exhaust to withdraw laser gas from the cavity, and a pressure sensor for measuring a gas pressure of the laser gas in the cavity. The invention further concerns a lithography system, in particular extreme ultraviolet lithography system, comprising a drive laser with an optical amplification device as mentioned before. Additionally, the invention concerns a method for controlling an output power of an optical amplification device.

The invention can be applied in the field of drive laser systems for use in extreme ultraviolet (EUV) lithography. Those drive laser systems typically include a laser source for generating pulsed laser radiation and an optical amplification device including multiple optical amplifiers for amplifying the pulsed laser radiation. Generally, the optical amplifiers include cavities that are filled with a laser gas, e.g., a mixture comprising CO₂, N₂ and He. The laser gas may be excited by radio-frequency (RF) signals applied to the laser gas using electrodes.

The laser gas in each of the cavities is continuously refreshed. Therefore, fresh laser gas is supplied to each of the cavities while a certain amount of laser gas is withdrawn from the cavities. To maintain a stable gas pressure in the cavities, the gas pressure is measured using a pressure sensor and controlled by a closed loop control. In known systems the gas pressure in the each of the cavities is independently controlled. The gas pressure in each of the cavities thus fluctuates around a predetermined set point. The set points for the multiple cavities typically differ and are optimized for maximized output power of the optical amplification device and low reflected light amplification.

It has, however, shown that the fluctuation of the gas pressure leads to a variation of amplification gain. As multiple optical amplifiers are arranged in series, those variations propagate through the optical amplifier chain of the optical amplification device and cascade. The relative positions of the minima and maxima of the pressure fluctuations of each of the optical amplifiers continuously vary. This results in a broad variation of the output power of the optical amplification device.

Against this background, the problem underlying the invention is to reduce power fluctuation at the output of the optical amplification device.

According to an aspect of the **invention,** an optical amplification device is provided comprising multiple optical amplifiers that are arranged in series to amplify laser radiation, wherein the multiple optical amplifiers each comprise a cavity, a laser gas supply to supply laser gas to the cavity, a laser gas exhaust to withdraw laser gas from the cavity, a pressure sensor for measuring a gas pressure of the laser gas in the cavity, and a control unit that is configured to adjust an inflow of laser gas to a first cavity of the cavities and/or an outflow of laser gas from the first cavity of the cavities depending on the gas pressure measured in one or more of the other cavities.

In the inventive optical amplification device, the control unit allows to control the gas pressure in the first cavity depending on the gas pressure measured in one or more of the other cavities. This allows to align the temporal evolvement of the gas pressure in all cavities of the optical amplification device to achieve an output power with reduced fluctuation. The invention, in particular, allows to synchronize the temporal evolvement of the gas pressure in two or more, in particular all, cavities.

For example, the control unit can be configured to increase the gas pressure in the first cavity in reaction to a decreasing gas pressure in one or more of the other cavities. Thereby, the gain of the first cavity can be increased if the gain of one or more of the other cavities is reduced. In contrast, the control unit can be configured to reduce the gas pressure in the first cavity can in reaction to an increasing gas pressure in one or more of the other cavities. In this case, the gain of the first cavity can be reduced if the gain of one or more of the other cavities is increased. Those exemplary control strategies may help to stabilize the overall amplification of the optical amplification device comprising the multiple cavities.

In this description, the term "first cavity" or "first amplifier" is used to indicate an individual cavity or amplifier of all the cavities or amplifiers of the optical amplification device. The term should not be construed to only refer to the amplifier at the beginning of the optical amplifier chain but should be understood to refer to an individual amplifier at an arbitrary position in the optical amplifier chain.

Preferably, the control unit is configured to adjust an inflow of laser gas to all cavities and/or an outflow of laser gas from all cavities depending on the gas pressure measured in one or more of the respective other cavities. Thereby, the overall amplification of the optical amplification device may be further stabilised in comparison to only adjusting inflow to and/or outflow from one of the cavities. Thus, all preferred embodiments disclosed in this description with reference to the first cavity may also applied to all other cavities of the optical amplification device.

According to a preferred embodiment of the invention, the control unit is further configured to adjust the inflow of laser gas to the cavities and/or the outflow of laser gas from cavities such that the gas pressure in the respective cavity is periodically fluctuating around a setpoint, wherein a phase shift of the periodically fluctuating gas pressure in the first cavity with respect to the periodically fluctuating gas pressure in one or more of the other cavities is set to a value greater than 0. If the gas pressure in two or more cavities is periodically fluctuating in phase, the power variation of the combination of those cavities is increased. By setting the phase shift to a value greater than 0, the variation of optical power can be reduced. If the gas pressure is fluctuating in two cavities with the same period, it is preferred to set the phase shift to 180° so that the gas pressure fluctuations in both cavities can cancel each other out.

According to a preferred embodiment of the invention, the control unit is further configured to adjust the inflow to and/or outflow of laser gas from the first cavity of the cavities by adapting a control parameter of a gas pressure control of the first cavity, in particular by adapting a maximum allowable gas pressure in the cavity and/or a minimum allowable gas pressure in the cavity. The maximum allowable gas pressure and minimum allowable gas pressure may define an allowable range of the gas pressure which is used as a control parameter to control the gas pressure in the first cavity. For example, the control unit may be configured to, at least temporarily, increase the maximum allowable gas pressure and/or decrease the minimum allowable gas pressure to increase the allowable range of the gas pressure inside the first cavity. In contrast, the allowable range may be decreased by decreasing the maximum allowable gas pressure and/or increasing the minimum allowable gas pressure. Thereby, the phase of the pressure fluctuation of the gas pressure in the first cavity may by adjusted.

According to a preferred embodiment of the invention, the first cavity includes an inflow valve and the control unit is further configured to adjust the inflow of laser gas to the first cavity by adjusting a switching time of the inflow valve. The switching time is considered a certain point in time at which the valve switches between an open state and a closed state or vice versa. By adjusting the switching time, a duration of an open state of the valve and/or a duration of a closed state of the valve may be changed. Adjusting the switching time of the inflow valve may help to adjust the phase and/or period of the pressure fluctuation of the gas pressure in the first cavity.

According to a preferred embodiment of the invention, the first cavity includes an outflow valve and that the control unit is further configured to adjust the outflow of laser gas from the first cavity by adjusting a switching time of the outflow valve. The switching time is considered a certain point in time at which the valve switches between an open state and a closed state or vice versa. By adjusting the switching time, a duration of an open state of the valve and/or a duration of a closed state of the valve may be changed. Adjusting the switching time of the outflow valve may help to adjust the phase and/or period of the pressure fluctuation of the gas pressure in the first cavity.

According to a preferred embodiment of the invention, the first cavity includes an inflow regulation device and the control unit is further configured to adjust the inflow of laser gas to the first cavity by adjusting the inflow rate using the inflow regulation device. Adjusting the inflow rate may help to adjust the phase and/or period of the pressure fluctuation of the gas pressure in the first cavity. The inflow regulation device may include a controllable pump and/or a volumetric flow controller and/or multiple position valves.

According to a preferred embodiment of the invention, the first cavity includes an outflow regulation device and the control unit is further configured to adjust the outflow of laser gas from the first cavity by adjusting the outflow rate using the outflow regulation device. Adjusting the outflow rate may help to adjust the phase and/or period of the pressure fluctuation of the gas pressure in the first cavity. The outflow regulation device may include a controllable vacuum pump and/or a volumetric flow controller and/or multiple position valves.

Preferably, the optical amplification device includes three or more optical amplifiers. For example, the optical amplification device may include exactly four optical amplifiers. In this case, exactly four optical amplifiers are arranged in series to form the optical amplifier chain.

Preferably, the optical amplifiers each include a excitation device, for example a pair of electrodes, configured for exciting the laser gas, e.g., by radio-frequency signals.

Preferably, the optical amplification device includes at least one laser gas supply unit for supplying the laser gas to one or more, in particular to all, cavities. The laser gas supply unit preferably comprises a gas mixer which is configured for mixing the laser gas from two or more ingredients, e.g., from CO₂, N₂ and He.

Preferably, the optical amplification device includes at least one vacuum pump configured to suck laser gas out of one or more, in particular all cavities.

According to another aspect of the **invention**, a lithography system, in particular an extreme ultraviolet lithography system, is provided, comprising a drive laser with an optical amplification device as described before.

According to yet another aspect of the **invention**, we provide a method for controlling an output power of an optical amplification device comprising multiple optical amplifiers that are arranged in series and amplify laser radiation, wherein the multiple optical amplifiers each comprise a cavity to which laser gas is supplied to and from which laser gas is withdrawn from, wherein a gas pressure of the laser gas in each of the cavities is measured, wherein an inflow of laser gas to a first cavity of the cavities and/or an outflow of laser gas from the first cavity of the cavities is adjusted depending on the gas pressure measured in one or more of the other cavities.

The advantageous effects disclosed in combination with the inventive optical amplification device also apply to the inventive method.

For example, the gas pressure in the first cavity can be increased in reaction to a decreasing gas pressure in one or more of the other cavities. Thereby, the gain of the first cavity can be increased if the gain of one or more of the other cavities is reduced. Additionally or alternatively, the gas pressure in the first cavity can be reduced in reaction to an increasing gas pressure in one or more of the other cavities. In this case, the gain of the first cavity can be reduced if the gain of one or more of the other cavities is increased. Those exemplary control strategies may help to stabilize the overall amplification of the optical amplification device comprising the multiple cavities. This allows to align the temporal evolvement of the gas pressure in all cavities of the optical amplification device to achieve an output power with reduced fluctuation.

Preferably, the inflow of laser gas to all cavities and/or the outflow of laser gas from all cavities is adjusted depending on the gas pressure measured in one or more of the respective other cavities. Thereby, the overall amplification of the optical amplification device may be further stabilised in comparison to only adjusting inflow to and/or outflow from one of the cavities. Thus, all preferred embodiments disclosed in this description with reference to the first cavity may also applied to all other cavities of the optical amplification device.

According to a preferred embodiment of the invention, the gas pressure of the laser gas in each of the cavities is periodically fluctuating, and the inflow to and/or outflow from the first cavity is adjusted to set a phase shift of the periodically fluctuating gas pressure in the first cavity with respect to the periodically fluctuating gas pressure in one or more of the other cavities to a value greater than 0. As explained with reference to the optical amplification device, setting the phase shift to a value greater than 0 may reduce the variation of optical power be reduced.

According to a preferred embodiment of the invention, the inflow to and/or outflow of laser gas from the first cavity of the cavities is adjusted by adapting a control parameter of a gas pressure control of the first cavity, in particular by adapting a maximum allowable gas pressure in the cavity and/or a minimum allowable gas pressure in the cavity. The maximum allowable gas pressure and minimum allowable gas pressure may define an allowable range of the gas pressure which is used as a control parameter to control the gas pressure in the first cavity. For example, the maximum allowable gas pressure may be, at least temporarily, increased and/or the minimum allowable gas pressure may be, at least temporarily, decreased to increase the allowable range of the gas pressure inside the first cavity. In contrast, the allowable range may be decreased by decreasing the maximum allowable gas pressure and/or increasing the minimum allowable gas pressure. Thereby, the phase of the pressure fluctuation of the gas pressure in the first cavity may by adjusted.

According to a preferred embodiment of the invention, adjusting the inflow of laser gas to the first cavity includes adjusting a switching time of an inflow valve. Adjusting the switching time of the inflow valve may help to adjust the phase and/or period of the pressure fluctuation of the gas pressure in the first cavity.

According to a preferred embodiment of the invention, adjusting the outflow of laser gas from the first cavity includes adjusting a switching time of an outflow valve. Adjusting the switching time of the outflow valve may help to adjust the phase and/or period of the pressure fluctuation of the gas pressure in the first cavity.

According to a preferred embodiment of the invention, adjusting the inflow of laser gas to a first cavity of the cavities includes adjusting an inflow rate of the laser gas to the first cavity. Adjusting the inflow rate may help to adjust the phase and/or period of the pressure fluctuation of the gas pressure in the first cavity. The inflow regulation device may include a controllable pump and/or a volumetric flow controller and/or multiple position valves.

According to a preferred embodiment of the invention, adjusting the outflow of laser gas from the first cavity of the cavities includes adjusting an outflow rate of the laser gas from the first cavity. Adjusting the outflow rate may help to adjust the phase and/or period of the pressure fluctuation of the gas pressure in the first cavity. The outflow regulation device may include a controllable vacuum pump and/or a volumetric flow controller and/or multiple position valves.

Alternatively, or additionally, the advantageous embodiments and features disclosed in combination with the inventive optical amplifier can, alone or in combination, be applied to the inventive method.

Further details and advantages of the invention will be elucidated in the following using the embodiment shown in the figure.
- Fig. 1: depicts a lithography system according to an embodiment of the present invention in a schematic diagram;
- Fig. 2: depicts an optical amplification system according to an embodiment of the present invention in a schematic diagram;
- Fig. 3: depicts the optical amplifiers and the control unit of the optical amplification system according to Fig. 2 in a schematic diagram;
- Fig. 4: depicts measured gas pressure and optical power fluctuations for the optical amplifiers of the optical amplification system according to Fig. 2; and
- Fig. 5: depicts exemplary pressure fluctuations in two cavities of the optical amplification system according to Fig. 2 for illustrating strategies for adjusting gas pressure in the cavities.

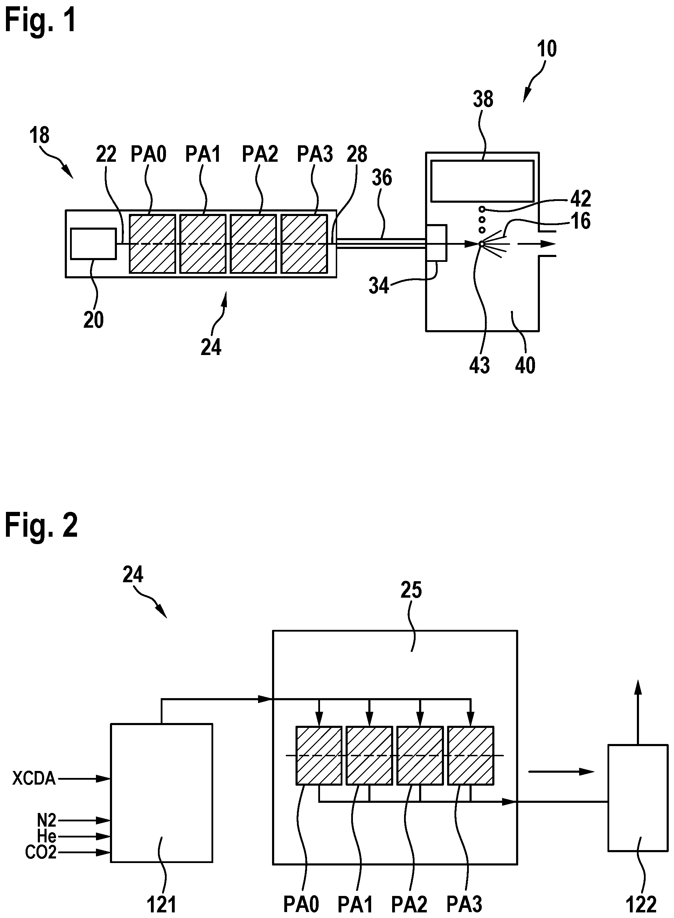

The embodiment in **Fig. 1** shows a lithography system 10 that comprises a laser system 18, which in the present embodiment is designed as an drive laser. However, the laser system 18 can just as well be designed as a material processing laser, e.g. as a cutting laser, or as a laser for use in laser-mediated nuclear fusion. In any case, the laser system 18, hereinafter exemplarily referred to as drive laser, comprises a beam source arrangement 20 for generating a laser radiation 22, which in the present embodiment is designed as an excitation laser beam.

In addition, the drive laser 18 has an optical amplification device 24 having multiple optical amplifiers PA0, PA1, PA2, PA3. The optical amplification device 24 is configured such as to be able to amplify the laser radiation 22 to an amplified laser beam 28, here exemplarily to an amplified excitation laser beam. In the present embodiment of the laser system 18, the optical amplification device 24 has exactly four optical amplifiers PA0, PA1, PA2, PA3 that are arranged in series to amplify the laser radiation 22. The optical amplifiers PA0, PA1, PA2, PA3 thus form an amplifier chain.

In embodiments of the drive laser 18 not explicitly shown, the optical amplification device 24 may have only two or three optical amplifiers or more than four optical amplifiers.

In addition to the laser system 18, the lithography system 10 has a focusing unit 34, a beam transport system 36 and a target material generator 38. In the present embodiment of the lithography system 10, an excitation volume 40 is also present.

The amplified excitation light beam 28 can be transported or guided towards the focusing unit 34 by means of the beam transport system 36. In the present embodiment of the lithography system 10, the beam transport system 36 essentially only forms a housing for the amplified excitation laser beam 28 in order to keep external influences on the amplified excitation laser beam 28 and possible personal injuries as low as possible or even to eliminate them completely.

In embodiments not specifically shown, the beam transport system 36 can be configured such as to transport the amplified excitation laser beam 28 from a first installation area to a second installation area, which installation areas are not explicitly provided with a reference sign, wherein the laser system 18 can be arranged in the first installation area and the focusing unit 34 and the target material generator 38 can be arranged in the second installation area. The first installation area can, for example, be a lower installation level, e.g. a basement. The second installation area can be arranged higher than the first installation area, e.g. at ground level.

By means of the focusing unit 34, the amplified laser beam 28, which leaves the optical amplification device 24 can be focused into the excitation volume 40.

The target material generator 38 is in the present embodiment of the lithography system 10 designed to generate units 42 of a target material and to fire these units 42 under high pressure into the excitation volume 40, where the units 42 can then be individually excited by means of the amplified excitation laser beam 28. The excitation of the units 42 by means of the amplified excitation laser beam 28 causes an ionization and a vaporization of the target material due to a comparatively extremely high energy input into the corresponding units 42, whereby a target material plasma 43 is generated.

In the present embodiment, a secondary radiation in the form of ultraviolet light is emitted as a byproduct of the generation of the target material plasma 43 and/or by the target material plasma 43 itself, which is exemplarily realized in the form of EUV light 16 with an average wavelength of approximately 13.5 nm. In other embodiments not specifically shown, this may also be another secondary radiation such as X-rays.

As depicted in **Fig. 2** the optical amplification device 24 comprises an amplifier chain 25 formed from the multiple optical amplifiers PA0, PA1, PA2, PA3 that are arranged in series. Laser gas is mixed in a gas mixer 121 from separate gas sources containing nitrogen N2, Helium He, carbon dioxide CO2 and extreme clean dry air XCDA. The laser gas is supplied to all optical amplifiers PA0, PA1, PA2, PA3. Consumed laser gas is withdrawn from the optical amplifiers PA0, PA1, PA2, PA3 by a vacuum pump 122.

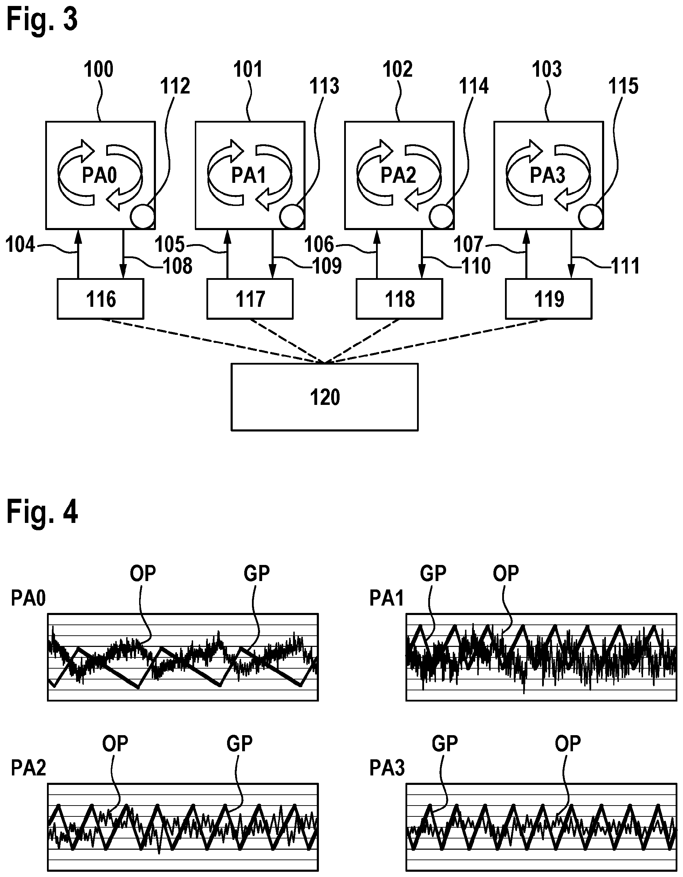

**Fig. 3** visualizes the distribution of laser gas in the optical amplifiers PA0, PA1, PA2, PA3 of the optical amplification device 24. The optical amplifiers PA0, PA1, PA2, PA3 each comprise a cavity 100, 101, 102, 103, a laser gas supply 104, 105, 106, 107 to supply laser gas to the cavity 100, 101, 102, 103, a laser gas exhaust 108, 109, 110, 111 to withdraw laser gas from the cavity 100, 101, 102, 103, and a pressure sensor 112, 113, 114, 115 for measuring a gas pressure of the laser gas in the cavity 100, 101, 102, 103.

Although not explicitly shown in Fig. 3, the pressure sensors 112, 113, 114, 115 are connected to a control unit 120 for providing the measured gas pressure to the control unit 120. The control unit 120 is configured to adjust an inflow of laser gas to each cavity 100, 101, 102, 103 and/or an outflow of laser gas from the cavities 100, 101, 102, 103 depending on the gas pressure measured in one or more of the other cavities 100, 101, 102, 103. By this approach, the control unit 120 is able to align the temporal evolvement of the gas pressure in all cavities 100, 101, 102, 103 to achieve an overall output power with reduced fluctuation. Setting the inflow to the cavities 100, 101, 102, 103 through the respective gas supply 104, 105, 106, 107 and/or setting the outflow of laser gas from the cavities 100, 101, 102, 103 through the respective laser gas exhaust 108, 109, 110, 111 can be adjusted by a gas control 116, 117, 118, 119. The gas control 116, 117, 118, 119 may be separate units from the control unit 120 as shown in Fig. 3. Alternatively, the gas control may by integrated into the control unit 120 or the control unit may directly adjust the inflow and/or outflow.

The graphs in **Fig. 4** show exemplary measured gas pressure GP and optical power OP fluctuations for the optical amplifiers PA0, PA1, PA2, PA3 of the optical amplification system 24 according to Fig. 2 over time. It is apparent that the fluctuations propagate and cascade on top of each other starting from PA0 via PA1, PA2 and PA3. Without aligning the fluctuations, the maxima and minima of gas pressure GP and optical power OP are randomly distributed over time. This leads to a rather high fluctuation range and low confidence range for output power. According to the invention, the an overall output power with reduced fluctuation can be achieved by aligning the temporal evolvement of the gas pressure GP in the cavities by the control unit 120.

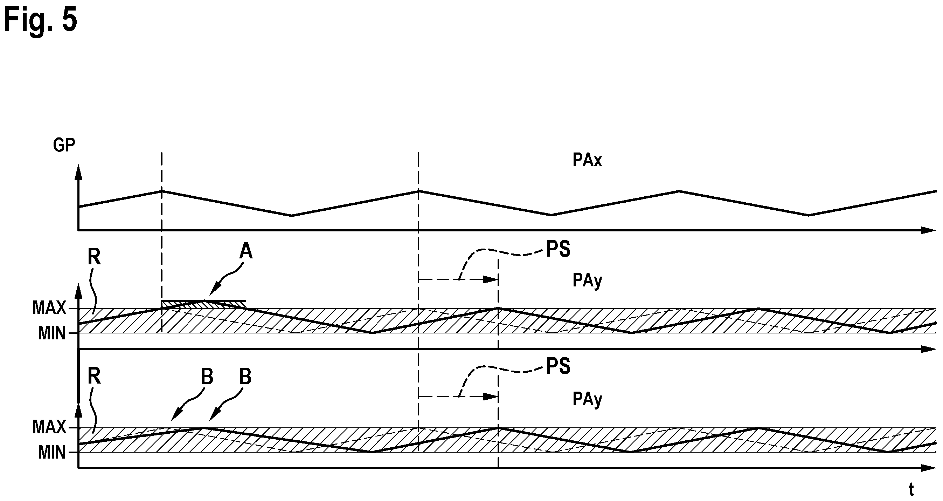

**Fig. 5** depicts exemplary pressure fluctuations in two cavities of the optical amplification system according to Fig. 2 for illustrating strategies for adjusting gas pressure in the cavities. Here, the upper diagram shows gas pressure in the "second" cavity of a so called "second" optical amplifier PAx, whereas the middle and lower diagrams show gas pressure in the "first" cavity of a "first" optical amplifier PAy, wherein the gas pressure in the first optical amplifier PAy is controlled depending on the gas pressure in the second optical amplifier PAx. In both strategies shown in the middle and lower diagrams, the gas pressure GP of the laser gas in the first and second cavities is periodically fluctuating, and the inflow to and/or outflow from the first cavity of the first optical amplifier PAy is adjusted to set a phase shift PS of the periodically fluctuating gas pressure in the first cavity with respect to the periodically fluctuating gas pressure GP in the second cavity of the second optical amplifier PAx to a value greater than 0.

The middle diagram of Fig. 5 relates to a system where the inflow of laser gas cannot be adjusted and a shut-off valve is used to switch outflow of the laser gas from the first cavity. Here, the shut-off valve is opened to reduce gas pressure GP, whereas in the closed position of the shut-off valve, the pressure increases due to the constant supply of laser gas to the respective cavity. The switching of the shut-off valve is triggered by certain values of the measured gas pressure in the cavity. If the gas pressures GP reaches a predetermined maximum allowable value MAX, the shut-off valve is opened to reduce gas pressure. If the gas pressure reaches a predetermined minimum allowable value MIN, the shut-off valve is closed to increase gas pressure GP in the cavity. The maximum allowable value MAX and minimum allowable value MIN define an allowable gas pressure range R. The phase shift PS of the gas pressure GP in the cavities can be adjusted by adapting the range R, for example by adapting the maximum allowable gas pressure MAX in the cavity and/or the minimum allowable gas pressure MIN in the cavity. The middle diagram in Fig. 5 shows a situation, where at time A the maximum allowable gas pressure MAX is temporarily increased. In other words, the allowable range R is temporarily increased. Thereby, a phase shift PS is introduced between the gas pressure GP in the first cavity PAy and the gas pressure GP in the second cavity PAx.

Alternatively, the same effect may be achieved by adjusting a switching time of the outflow valve. Further alternatively, it is possible to adjust a switching time of an inflow valve.

The lower diagram of Fig. 5 relates to a system where the gas regulation makes use of a controllable inflow to the first cavity and/or controllable outflow from the first cavity. Here, adjusting the inflow of laser gas to the first of the cavities includes adjusting the inflow rate of the laser gas to the first cavity is adjusted to modify the phase shift PS between the gas pressure GP in the first cavity and the gas pressure GP in the second cavity. Alternatively or additionally, it may be considered to adjust an outflow rate of the laser gas from the first cavity. This control scheme can allow to keep the allowable pressure range R unchanged, but instead adapt the exchange rate and gas purity.

In the inventive optical amplification device 24, the control unit 120 allows to control the gas pressure GP in the first cavity PAy, 100, 101, 102, 103 depending on the gas pressure GP measured in one or more of the other cavities PAx, 100, 101, 102, 103. This allows to align the temporal evolvement of the gas pressure GP in all cavities 100, 101, 102, 103 of the optical amplification device 24 to achieve an output power with reduced fluctuation. The invention, in particular, allows to synchronize the temporal evolvement of the gas pressure GP in two or more, in particular all, cavities 100, 101, 102, 103.

### Reference Signs:

- 10: lithography system
- 16: EUV light
- 18: laser system
- 20: source arrangement
- 22: laser beam
- 24: optical amplification device
- 25: amplifier chain
- 28: amplified laser beam
- 34: focusing unit
- 36: transport system
- 38: material generator
- 40: excitation volume
- 42: unit
- 43: material plasma
- 100, 101, 102, 103: cavity
- 104, 105, 106, 107: laser gas supply
- 108, 109, 110, 111: laser gas exhaust
- 112, 113, 114, 115: pressure sensor
- 116, 117, 118, 119: gas control
- 120: control unit
- 121: gas mixer
- 122: vacuum pump
- CO2: carbon dioxide
- He: Helium
- N2: nitrogen
- PA0, PA1, PA2, PA3: optical amplifier
- t: time
- XCDA: extreme clean dry air

## Claims

1. Optical amplification device (24) comprising multiple optical amplifiers (PAO, PA1, PA2, PA3) that are arranged in series to amplify laser radiation, wherein the multiple optical amplifiers (PAO, PA1, PA2, PA3) each comprise a cavity (100, 101, 102, 103), a laser gas supply (104, 105, 106, 107) to supply laser gas to the cavity (100, 101, 102, 103), a laser gas exhaust to (108, 109, 110, 111) withdraw laser gas from the cavity (100, 101, 102, 103), and a pressure sensor (112, 113, 114, 115) for measuring a gas pressure of the laser gas in the cavity (100, 101, 102, 103), **characterized by**
a control unit (120) that is configured to adjust an inflow of laser gas to a first cavity (100, 101, 102, 103) of the cavities and/or an outflow of laser gas from the first cavity (100, 101, 102, 103) of the cavities depending on the gas pressure measured in one or more of the other cavities (100, 101, 102, 103).

2. Optical amplification device (24) according to claim 1, **characterized in that** the control unit (120) is further configured to adjust the inflow of laser gas to the cavities (100, 101, 102, 103) and/or the outflow of laser gas from cavities (100, 101, 102, 103) such that the gas pressure in the respective cavity (100, 101, 102, 103) is periodically fluctuating around a setpoint, wherein a phase shift of the periodically fluctuating gas pressure in the first cavity (100, 101, 102, 103) with respect to the periodically fluctuating gas pressure in one or more of the other cavities (100, 101, 102, 103) is set to a value greater than 0.

3. Optical amplification device (24) according to any of the preceding claims, **characterized in that** the control unit (120) is further configured to adjust the inflow to and/or outflow of laser gas from the first cavity (100, 101, 102, 103) of the cavities by adapting a control parameter of a gas pressure control of the first cavity (100, 101, 102, 103), in particular by adapting a maximum allowable gas pressure in the cavity (100, 101, 102, 103) and/or a minimum allowable gas pressure in the cavity (100, 101, 102, 103).

4. Optical amplification device (24) according to any of the preceding claims, **characterized in that** the first cavity (100, 101, 102, 103) includes an inflow valve and that the control unit (120) is further configured to adjust the inflow of laser gas to the first cavity (100, 101, 102, 103) by adjusting a switching time of the inflow valve.

5. Optical amplification device (24) according to any of the preceding claims, **characterized in that** the first cavity (100, 101, 102, 103) includes an outflow valve and that the control unit (120) is further configured to adjust the outflow of laser gas from the first cavity (100, 101, 102, 103) by adjusting a switching time of the outflow valve.

6. Optical amplification device (24) according to any of the preceding claims, wherein the first cavity (100, 101, 102, 103) includes an inflow regulation device and the control unit (120) is further configured to adjust the inflow of laser gas to the first cavity (100, 101, 102, 103) by adjusting the inflow rate using the inflow regulation device.

7. Optical amplification device (24) according to any of the preceding claims, wherein the first cavity (100, 101, 102, 103) includes an outflow regulation device and the control unit (120) is further configured to adjust the outflow of laser gas from the first cavity (100, 101, 102, 103) by adjusting the outflow rate using the outflow regulation device.

8. Lithography system (101), in particular extreme ultraviolet lithography system, comprising a drive laser (100) with an optical amplification device (24) according to any of the preceding claims.

9. Method for controlling an output power of an optical amplification device (24) comprising multiple optical amplifiers (PAO, PA1, PA2, PA3) that are arranged in series and amplify laser radiation, wherein the multiple optical amplifiers each comprise a cavity (100, 101, 102, 103) to which laser gas is supplied to and from which laser gas is withdrawn from, wherein a gas pressure of the laser gas in each of the cavities (100, 101, 102, 103) is measured,
**characterized in that**
an inflow of laser gas to a first cavity (100, 101, 102, 103) of the cavities and/or an outflow of laser gas from the first cavity (100, 101, 102, 103) of the cavities is adjusted depending on the gas pressure measured in one or more of the other cavities (100, 101, 102, 103).

10. Method according to claim 9, wherein the gas pressure of the laser gas in each of the cavities (100, 101, 102, 103) is periodically fluctuating, and the inflow to and/or outflow from the first cavity (100, 101, 102, 103)is adjusted to set a phase shift of the periodically fluctuating gas pressure in the first cavity (100, 101, 102, 103) with respect to the periodically fluctuating gas pressure in one or more of the other cavities (100, 101, 102, 103) to a value greater than 0.

11. Method according to any of claims 9 to 10, wherein the inflow to and/or outflow of laser gas from the first cavity (100, 101, 102, 103) of the cavities is adjusted by adapting a control parameter of a gas pressure control of the first cavity (100, 101, 102, 103), in particular by adapting a maximum allowable gas pressure in the cavity (100, 101, 102, 103) and/or a minimum allowable gas pressure in the cavity (100, 101, 102, 103).

12. Method according to any of claims 9 to 11, wherein adjusting the inflow of laser gas to the first cavity (100, 101, 102, 103) includes adjusting a switching time of an inflow valve.

13. Method according to any of claims 9 to 12, wherein adjusting the outflow of laser gas from the first cavity (100, 101, 102, 103) includes adjusting a switching time of an outflow valve.

14. Method according to any of claims 9 to 13, wherein adjusting the inflow of laser gas to a first cavity (100, 101, 102, 103) of the cavities includes adjusting an inflow rate of the laser gas to the first cavity (100, 101, 102, 103).

15. Method according to any of claims 9 to 14, wherein adjusting the outflow of laser gas from the first cavity (100, 101, 102, 103) of the cavities includes adjusting an outflow rate of the laser gas from the first cavity (100, 101, 102, 103).
